(19) Europäisches Patentamt
European Patent Office
Office européen des brevets

(11) EP 4 538 197 A1

(12) **EUROPEAN PATENT APPLICATION**
published in accordance with Art. 153(4) EPC

(43) Date of publication:
**16.04.2025 Bulletin 2025/16**

(21) Application number: **24829013.2**

(22) Date of filing: **28.06.2024**

(51) International Patent Classification (IPC):
***B65D 77/00*** *(2006.01)* ***B65D 45/32*** *(2006.01)*
***C08J 3/12*** *(2006.01)*

(52) Cooperative Patent Classification (CPC):
**B65D 45/32; B65D 77/00; C08J 3/12**

(86) International application number:
**PCT/JP2024/023636**

(87) International publication number:
**WO 2025/005282 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 JP 2023107710**

(71) Applicant: **DAIKIN INDUSTRIES, LTD.**
**Osaka-shi, Osaka 530-0001 (JP)**

(72) Inventors:
- **USAMI, Ryota**
  **Osaka-Shi, Osaka 530-0001 (JP)**
- **YAMADA, Takaya**
  **Osaka-Shi, Osaka 530-0001 (JP)**
- **TERADA, Junpei**
  **Osaka-Shi, Osaka 530-0001 (JP)**
- **KINOSHITA, Tsuyoshi**
  **Osaka-Shi, Osaka 530-0001 (JP)**
- **KATO, Taketo**
  **Osaka-Shi, Osaka 530-0001 (JP)**
- **YAMANAKA, Taku**
  **Osaka-Shi, Osaka 530-0001 (JP)**
- **YASUDA, Kohei**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **CONTAINER**

(57) The disclosure aims to provide a container in which polytetrafluoroethylene is less likely to fibrillate. The disclosure relates to a container for filling with polytetrafluoroethylene, the container having a columnar shape with an inner wall of a side surface tapered either forward or inversely.

FIG.1

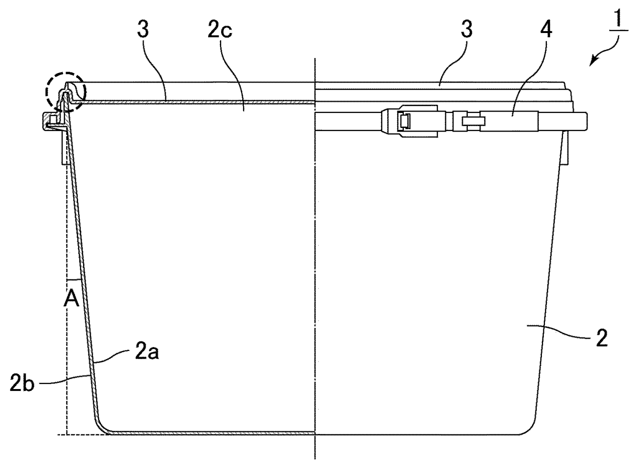




Processed by Luminess, 75001 PARIS (FR)

## Description

### TECHNICAL FIELD

The disclosure relates to containers for filling with polytetrafluoroethylene.

### BACKGROUND ART

Patent Literatures 1 and 2 each describe use of an aqueous dispersion of polytetrafluoroethylene as a binder for batteries.

### CITATION LIST

- Patent Literature

Patent Literature 1: JP 2004-31179 A
Patent Literature 2: JP H11-343317 A

### SUMMARY OF INVENTION

- Technical Problem

The disclosure aims to provide a container in which polytetrafluoroethylene is less likely to fibrillate.

- Solution to Problem

The disclosure (1) relates to a container for filling with polytetrafluoroethylene, the container having a columnar shape with an inner wall of a side surface tapered either forward or inversely.
The disclosure (2) relates to the container according to the disclosure (1), wherein the polytetrafluoroethylene has an extrusion pressure at a reduction ratio of 100 of 5 MPa or higher and/or is expandable.
The disclosure (3) relates to the container according to the disclosure (1) or (2), wherein the polytetrafluoroethylene has an extrusion pressure at a reduction ratio of 100 of 5 MPa or higher and is expandable.
The disclosure (4) relates to the container according to any one of the disclosures (1) to (3), wherein the polytetrafluoroethylene has an extrusion pressure at a reduction ratio of 100 of 5 to 20 MPa.
The disclosure (5) relates to the container according to any one of the disclosures (1) to (4), wherein the polytetrafluoroethylene is used as a binder for an electrochemical device.
The disclosure (6) relates to the container according to any one of the disclosures (1) to (5), wherein a difference between a top-face inner diameter and a bottom-face inner diameter is 5 to 100 mm.
The disclosure (7) relates to the container according to any one of the disclosures (1) to (6), wherein the container has a taper angle of 0.5° to 10°.
The disclosure (8) relates to the container according to any one of the disclosures (1) to (7), wherein the container is made of polypropylene substantially free from a plasticizer.
The disclosure (9) relates to the container according to any one of the disclosures (1) to (8), wherein the container has an inner wall with a surface roughness of 1.00 μm or less.
The disclosure (10) relates to the container according to any one of the disclosures (1) to (9), wherein the container includes a main body with an opening, a lid to be attached to the opening, and a clamp for fixing the lid.
The disclosure (11) relates to the container according to the disclosure (10), wherein the lid is attached to the opening in a state where a step provided on the lid is engaged with a protrusion provided on the main body and/or in a state where a protrusion provided on the lid is engaged with a step provided on the main body.
The disclosure (12) relates to the container according to any one of the disclosures (1) to (11), wherein the polytetrafluoroethylene has a water content of 0.050% by mass or less.
The disclosure (13) relates to the container according to any one of the disclosures (1) to (12), wherein the polytetrafluoroethylene has an apparent density of 0.40 to 0.60 g/ml.
The disclosure (14) relates to the container according to any one of the disclosures (1) to (13), wherein the polytetrafluoroethylene has an apparent density of 0.43 to 0.60 g/ml.
The disclosure (15) relates to the container according to any one of the disclosures (1) to (14), wherein the

polytetrafluoroethylene has a powder particle size of 300 to 700 μm.

The disclosure (16) relates to the container according to any one of the disclosures (1) to (15), wherein the polytetrafluoroethylene has a powder particle size of 500 to 700 μm.

The disclosure (17) relates to the container according to any one of the disclosures (1) to (16), wherein the polytetrafluoroethylene has a standard specific gravity of 2.200 or less.

The disclosure (18) relates to the container according to any one of the disclosures (1) to (17), wherein the polytetrafluoroethylene has a standard specific gravity of 2.130 to 2.170.

The disclosure (19) relates to the container according to any one of the disclosures (1) to (18), wherein the polytetrafluoroethylene has an apparent density of 0.43 to 0.60 g/ml, a powder particle size of 500 to 700 μm, and a standard specific gravity of 2.130 to 2.170.

The disclosure (20) relates to the container according to any one of the disclosures (1) to (19), wherein the polytetrafluoroethylene is a homopolymer of tetrafluoroethylene or a modified polytetrafluoroethylene containing a polymerized unit based on tetrafluoroethylene and a polymerized unit based on a modifying monomer.

The disclosure (21) relates to the container according to the disclosure (20), wherein the modifying monomer includes at least one selected from the group consisting of perfluoro(methyl vinyl ether) and hexafluoropropylene.

The disclosure (22) relates to the container according to any one of the disclosures (1) to (21), wherein the container is filled with the polytetrafluoroethylene.

The disclosure (23) relates to the container according to any one of the disclosures (1) to (22), wherein the container includes a desiccant.

The disclosure (24) relates to a method for storing polytetrafluoroethylene, including storing the polytetrafluoroethylene by filling the container according to any one of the disclosures (1) to (23) with the polytetrafluoroethylene.

The disclosure (25) relates to a container for filling with polytetrafluoroethylene, the polytetrafluoroethylene used to fill the container has a mass of 10 kg or less.

The disclosure (26) relates to the container according to the disclosure (25), wherein the polytetrafluoroethylene used to fill the container has a mass of 5 kg or less.

The disclosure (27) relates to the container according to the disclosure (25) or (26), wherein the polytetrafluoroethylene has a powder particle size of 100 μm or larger and smaller than 600 μm.

The disclosure (28) relates to the container according to any one of the disclosures (25) to (27), wherein the polytetrafluoroethylene has an apparent density of 0.35 to 0.48 g/ml.

The disclosure (29) relates to the container according to any one of the disclosures (25) to (28), wherein the polytetrafluoroethylene has a water content of 0.050% by mass or less.

The disclosure (30) relates to the container according to any one of the disclosures (25) to (29), wherein the polytetrafluoroethylene has a water content of 0.005% by mass or less.

The disclosure (31) relates to the container according to any one of the disclosures (25) to (30), wherein the polytetrafluoroethylene has a standard specific gravity of 2.130 to 2.170.

The disclosure (32) relates to the container according to any one of the disclosures (25) to (31), wherein the polytetrafluoroethylene has a water content of 0.005% by mass or less, an apparent density of 0.35 to 0.48 g/ml, a powder particle size of 100 μm or larger and smaller than 600 μm, and a standard specific gravity of 2.130 to 2.170.

The disclosure (33) relates to the container according to any one of the disclosures (25) to (32), wherein the polytetrafluoroethylene has a powder particle size of 100 μm or larger and smaller than 300 μm and/or an apparent density of 0.35 g/ml or more and less than 0.40 g/ml.

The disclosure (34) relates to the container according to any one of the disclosures (25) to (33), wherein the container is filled with the polytetrafluoroethylene.

- Advantageous Effects of Invention

The disclosure can provide a container in which polytetrafluoroethylene is less likely to fibrillate.

## BRIEF DESCRIPTION OF THE DRAWINGS

FIG. 1 is a schematic view of an example of a container of the disclosure.
FIG. 2 is a partial enlarged view of the container in FIG. 1.
FIG. 3 is a schematic view of a clamp included in the container in FIG. 1.
FIG. 4 is a schematic view of a modified example of the container of the disclosure.
FIG. 5 is a schematic view of a modified example of the container of the disclosure.
FIG. 6 is a partial enlarged view of a modified example of the container of the disclosure.

FIG. 7 is a schematic view of a modified example of the container of the disclosure.

DESCRIPTION OF EMBODIMENTS

The present inventors examined polytetrafluoroethylene to find out that polytetrafluoroethylene that is useful as a binder for electrochemical devices such as batteries tends to fibrillate more easily than normal polytetrafluoroethylene during storage or transportation in a filled container. In applications where large amounts of polytetrafluoroethylene are used, fibrillation of a portion of polytetrafluoroethylene is not a major problem. However, in an application where polytetrafluoroethylene is used as a binder for electrochemical devices, the effect of fibrillation is significant as the amount used is small, which strongly requires fibrillation control.

As a result of further studies, the present inventors found out that fibrillation is prevented or reduced when polytetrafluoroethylene is in a container having a columnar shape with its inner wall of the side surface tapered either forward or inversely, arriving at the first aspect of the disclosure. The present inventors also found out that limitation on the mass of polytetrafluoroethylene used to fill the container to 10 kg or less prevents or reduces fibrillation of the polytetrafluoroethylene in the container, arriving at the second aspect of the disclosure.

The disclosure will be specifically described hereinbelow.

The first aspect of the disclosure relates to a container for filling with polytetrafluoroethylene. The container has a columnar shape with its inner wall of the side surface tapered either forward or inversely.

Polytetrafluoroethylene (PTFE) in a container hardens when PTFE powder (particles) is crushed and compacted under its own weight. The PTFE powder typically needs to be loosened before use. Fibrillation is thought to occur during the loosening of such hardened powder. In the container according to the first aspect of the disclosure with its inner wall of the side surface tapered either forward or inversely, PTFE powder is less likely to be compacted as the force generated by its own weight is less likely to be applied thereto. Thus, fibrillation is prevented or reduced.

In the container according to the first aspect of the disclosure, the mass of PTFE used to fill the container is preferably 30 kg or less, more preferably 20 kg or less, still more preferably 15 kg or less. The lower limit thereof is normally, but not limited to, 1 kg or more.

The upper limit of the inner capacity of the container according to the first aspect of the disclosure is preferably 150 L or less, more preferably 120 L or less, still more preferably 100 L or less, further preferably 80 L or less. The lower limit thereof is preferably, but not limited to, 5 L or more, more preferably 10 L or more, still more preferably 20 L or more.

An example of the container according to the first aspect of the disclosure is described hereinbelow with reference to drawings.

As shown in FIG. 1, a container 1 includes a main body 2, a lid 3, and a clamp 4.

The main body 2 is a columnar component in which an inner wall 2a and an outer wall 2b of the side surface are tapered forward. The main body 2 is filled with PTFE through an opening 2c on the top face. After filling with PTFE, the inside of the main body 2 is sealed by attaching the lid 3 to the opening 2c of the main body 2 and fixing the lid 3 with the clamp 4.

The lid 3 is a circular component configured to cover the opening 2c and overlap with the side surface of the main body 2. As shown in FIG. 2, the lid 3 has a stair-like step 3a on the inside where it contacts the outer wall 2b, and the main body 2 has a protrusion 2d around the opening 2c. The lid 3 is attached to the opening 2c in a state where the step 3a is engaged with the protrusion 2d. This improves the sealing of the inside of the main body 2.

The clamp 4 is a ring-shaped component for fixing the lid 3 to the main body 2. As shown in FIG. 3, the clamp 4 before attachment has an open ring shape. After attachment, the ring is closed and clamped with a fixing portion 4a, thereby fixing the lid 3 to the main body 2. This improves the sealing of the inside of the main body 2.

The water content of PTFE used as a binder for electrochemical devices is required to be low. The container 1 having the above configuration achieves very high sealing of the inside of the main body 2, which enables storage of PTFE with its water content kept low.

The difference between the top-face inner diameter and the bottom-face inner diameter of the main body 2 is preferably 5 mm or larger, more preferably 10 mm or larger, still more preferably 15 mm or larger, particularly preferably 20 mm or larger, while preferably 100 mm or smaller, more preferably 80 mm or smaller, still more preferably 60 mm or smaller, particularly preferably 50 mm or smaller.

The top-face inner diameter is preferably 250 mm or larger, more preferably 300 mm or larger, still more preferably 350 mm or larger, particularly preferably 400 mm or larger, while preferably 800 mm or smaller, more preferably 700 mm or smaller, still more preferably 600 mm or smaller.

The bottom-face inner diameter is preferably 200 mm or larger, more preferably 250 mm or larger, still more preferably 300 mm or larger, particularly preferably 350 mm or larger, while preferably 750 mm or smaller, more preferably 650 mm or smaller, still more preferably 600 mm or smaller, particularly preferably 550 mm or smaller.

The taper angle of the inner wall 2a is preferably 0.5° or greater, more preferably 1° or greater, still more preferably 1.5° or greater, particularly preferably 2° or greater, while preferably 10° or smaller, more preferably 9° or smaller, still more

preferably 8° or smaller, further preferably 7° or smaller, further preferably 6° or smaller, particularly preferably 5° or smaller. A preferred range of the taper angle of the outer wall 2b is the same as that of the inner wall 2a.

The taper angle means the angle of inclination of the wall surface with respect to the normal line (see the taper angle "A" in FIG. 1).

The taper ratio of the container 1 is preferably 0.01 or more, more preferably 0.02 or more, still more preferably 0.03 or more, further preferably 0.04 or more, particularly preferably 0.05 or more, while preferably 0.20 or less, more preferably 0.19 or less, still more preferably 0.18 or less, further preferably 0.17 or less, further preferably 0.16 or less, particularly preferably 0.15 or less.

The taper ratio is a value defined by |(top-face inner diameter of main body 2) - (bottom-face inner diameter of main body 2) |/height of main body 2.

The height of the main body 2 is preferably 200 mm or more, more preferably 250 mm or more, still more preferably 300 mm or more, while preferably 500 mm or less, more preferably 450 mm or less, still more preferably 400 mm or less.

The container 1 (in particular, the main body 2 and the lid 3 which are to be directly in contact with PTFE) is preferably made of polypropylene substantially free from a plasticizer. This prevents or reduces contamination of PTFE by impurities.

The phrase "substantially free from a plasticizer" means that the plasticizer content relative to polypropylene is 1.0% by mass or less.

The surface roughness of the inner wall 2a is preferably 1.00 μm or less. This can prevent or reduce fibrillation of PTFE caused by contact with the inner wall 2a. The lower limit is normally, but not limited to, about 0.20 μm.

The surface roughness is a value determined as follows. The surface is observed using a 3D laser scanning microscope (VK-X1000 series available from Keyence Corporation) at 5x magnification. For the observed image, the arithmetic mean roughness is measured at a distance of 2.5 mm using the analysis software provided to the microscope. Similarly, images are taken at three locations in total and the arithmetic mean roughness is measured for each image. The average of the obtained values is defined as the surface roughness.

The container according to the first aspect of the disclosure is not limited to have the form described above, and may have a different form.

For example, as shown in FIG. 4, the inner wall 2a and the outer wall 2b of the side surface may be tapered inversely.

For example, as shown in FIG. 5, the inner wall 2a of the side surface may be tapered forward and the outer wall 2b may be not tapered (linear along the normal line).

As shown in FIG. 6, the form opposite to that in FIG. 2 may be employed. Specifically, the lid 3 has a protrusion 3b on the inside where it contacts the outer wall 2b, and the main body 2 has a stair-like step 2e around the opening 2c. The lid 3 is attached to the opening 2c in a state where the protrusion 3b is engaged with the step 2e.

The second aspect of the disclosure relates to a container for filling with polytetrafluoroethylene. The polytetrafluoroethylene used to fill the container has a mass of 10 kg or less.

The mass of PTFE used to fill the container according to the second aspect of the disclosure is 10 kg or less. In such a case, PTFE powder is less likely to be compacted as the force generated by its own weight is less likely to be applied thereto. Thus, fibrillation is prevented or reduced.

The container according to the second aspect of the disclosure is preferably filled with PTFE powder having a low apparent density. In such a case, PTFE powder is less likely to be compacted as the force generated by its own weight is less likely to be applied thereto. Thus, fibrillation is prevented or reduced.

The mass of PTFE used to fill the container according to the second aspect of the disclosure is preferably 8 kg or less, more preferably 6 kg or less, still more preferably 5 kg or less. The lower limit thereof is normally, but not limited to, 1 kg or more.

The upper limit of the inner capacity of the container according to the second aspect of the disclosure is preferably 75 L or less, more preferably 60 L or less, still more preferably 50 L or less, further preferably 40 L or less. The lower limit thereof is preferably, but not limited to, 5 L or more, more preferably 10 L or more.

The container according to the second aspect of the disclosure may have a columnar shape with its inner wall of the side surface tapered either forward or inversely, or it may have a columnar shape with a non-tapered inner wall of the side surface (linear along the normal line). In order to prevent or reduce fibrillation, the container preferably has a columnar shape with its inner wall of the side surface tapered either forward or inversely. The container having a columnar shape with its inner wall of the side surface tapered either forward or inversely may have, for example, the same form (form shown in FIGS. 1 to 6) as that of the container according to the first aspect of the disclosure. The container having a columnar shape with a non-tapered inner wall of the side surface (linear along the normal line) may have, for example, a form shown in FIG. 7.

Hereafter, the containers of the first and second aspects of the disclosure are also collectively referred to as the container of the disclosure.

The container of the disclosure may contain a desiccant in order to maintain the dry state in the container. Specific examples of the desiccant include silica gel, calcium oxide, and calcium chloride. Preferred are silica gel and calcium oxide, and more preferred is silica gel.

The desiccant may have either a granular shape or a sheet shape. The desiccant may be used either in a packaging material or in a bare state. The desiccant may be placed either on the PTFE filling the container or at a location on the inner surface of the container, such as the back side of the lid.

In order to prevent or reduce fibrillation, PTFE in a conventional container needs to be stored at low temperature (5°C to 20°C). In the case of the container of the disclosure, fibrillation is less likely to occur even at normal temperature. This allows storage of PTFE without temperature control depending on the region and time of year, which advantageously reduces the burden of storage.

The disclosure also relates to a storage method including storing PTFE by filling the container of the disclosure with the PTFE. In the storage method of the disclosure, PTFE can be stored at normal temperature (15°C to 30°C (preferably 25°C to 30°C)).

Hereinbelow, PTFE used to fill the container of the disclosure is described.

The PTFE can be suitably used as a binder for electrochemical devices. Examples of the electrochemical devices include lithium-ion secondary batteries, lithium-ion capacitors, capacitors such as hybrid capacitors and electric double-layer capacitors, radical batteries, solar cells, in particular dye-sensitized solar cells, lithium-ion primary batteries, fuel cells, various electrochemical sensors, electrochromic elements, electrochemical switching elements, aluminum electrolytic capacitors, and tantalum electrolytic capacitors. The binder may be either a binder for electrodes or a binder for solid electrolytes.

When used as a binder for electrochemical devices, the PTFE may be used alone or mixed with other materials (for example, polymers other than PTFE).

The PTFE is preferably in a powder form.

The PTFE preferably has an extrusion pressure at a reduction ratio (RR) of 100 of 5 MPa or higher and/or is expandable, more preferably has an extrusion pressure at a RR of 100 of 5 MPa or higher and is expandable. Such PTFE is useful as a binder for electrochemical devices such as batteries. Moreover, such PTFE is likely to fibrillate, and the disclosure is particularly effective for the PTFE.

The PTFE preferably has an extrusion pressure at a reduction ratio (RR) of 100 of 5 MPa or higher. In order to achieve improvement in handleability, binding force, and flexibility of the electrode and the like, the extrusion pressure is more preferably 10 MPa or higher, still more preferably 12 MPa or higher, further preferably 13 MPa or higher, particularly preferably 15 MPa or higher.

In order to achieve improved processibility, the extrusion pressure at a RR of 100 is preferably 50 MPa or lower, more preferably 40 MPa or lower, still more preferably 35 MPa or lower, further preferably 30 MPa or lower, further preferably 25 MPa or lower, particularly preferably 20 MPa or lower.

In order to achieve improvement in handleability, binding force, and flexibility of the electrode and the like, the PTFE preferably has an extrusion pressure at a RR of 300 of 10 Pa or higher, more preferably 15 MPa or higher, still more preferably 20 MPa or higher, further preferably 25 MPa or higher, particularly preferably 30 MPa or higher.

In order to achieve improved processibility, the extrusion pressure at a RR of 300 is preferably 45 MPa or lower, more preferably 40 MPa or lower.

The extrusion pressure at a RR of 100 is measured by the following method.

Fifty grams of PTFE powder and 10.25 g of hydrocarbon oil (trade name: Isopar-E, available from ExxonMobil Corporation) as an extrusion aid are mixed for three minutes in a polyethylene container. A cylinder of an extruder is filled with the resulting mixture at room temperature (25 ± 2°C). A load of 0.47 MPa is applied to a piston inserted into the cylinder and maintained for one minute. Then, the mixture is extruded through an orifice at a ram speed of 18 mm/min. The ratio of the cross-sectional area of the cylinder to the cross-sectional area of the orifice (reduction ratio) is 100. The value obtained by dividing the load (N) at which the pressure is in equilibrium in the latter half of the extrusion operation by the cylinder cross-sectional area is defined as the extrusion pressure (MPa).

The extrusion pressure at a RR of 300 is measured by the following method.

Fifty grams of PTFE powder and 11.00 g of hydrocarbon oil (trade name: Isopar-E, available from Exxon Mobil Corporation) as an extrusion aid are mixed for three minutes in a polyethylene container. A cylinder of an extruder is filled with the resulting mixture at room temperature (25 ± 2°C). A load of 0.47 MPa is applied to a piston inserted into the cylinder and maintained for one minute. Then, the mixture is extruded through an orifice at a ram speed of 18 mm/min. The ratio of the cross-sectional area of the cylinder to the cross-sectional area of the orifice (reduction ratio) is 300. The value obtained by dividing the load (N) at which the pressure is in equilibrium in the latter half of the extrusion operation by the cylinder cross-sectional area is defined as the extrusion pressure (MPa).

The PTFE may be either expandable or non-expandable. Still, the PTFE is preferably expandable.

The term "expandable" means that an expanded article is obtainable in the following expansion test.

The bead obtained by the paste extrusion at a RR of 100 described above is dried at 230°C for 30 minutes to

remove the lubricant. The dried bead is cut into appropriate lengths and placed in a furnace heated to 300°C. The cut beads are expanded in the furnace at an expanding speed of 1000%/sec.

In order to achieve further improvement in handleability, binding force, and flexibility of the electrode and the like, the PTFE is preferably expandable to 25 times its size.

Whether or not it is expandable to 25 times its size can be determined by the following expansion test.

The bead obtained by the paste extrusion at a RR of 100 described above is dried at 230°C for 30 minutes to remove the lubricant. The dried bead is cut into appropriate lengths and placed in a furnace heated to 300°C. The cut beads are expanded in the furnace at an expanding speed of 1000%/sec until the bead length reaches 25 times the length before the expansion test. If no breakage occurs during the expansion, the bead is determined to be expandable to 25 times its size.

The PTFE is preferably substantially free from water. In such a case, the electrode active material to be used together can be selected from a wide range of selections, which is advantageous in terms of the production process. The phrase "substantially free from water" means that the water content of the PTFE is 0.050% by mass or less.

The water content is preferably 0.040% by mass or less, more preferably 0.020% by mass or less, still more preferably 0.010% by mass or less, further preferably 0.005% by mass or less, particularly preferably 0.002% by mass or less.

The water content is determined by the following method.

The mass of the PTFE powder is weighed before and after heating at 150°C for two hours, and the water content is calculated by the following equation. The sample is taken three times, and this calculation is performed for each sample and the values are averaged.

Water content (% by mass) = [(mass (g) of PTFE powder before heating) - (mass (g) of PTFE powder after heating)]/(mass (g) of PTFE powder before heating) $\times$ 100

In order to achieve improved handleability, the PTFE preferably has an apparent density of 0.40 g/ml or higher, more preferably 0.43 g/ml or higher, still more preferably 0.45 g/ml or higher, further preferably 0.48 g/ml or higher. The upper limit may be, but is not limited to, 0.60 g/ml.

The apparent density is determined in conformity with JIS K 6892.

In order to prevent or reduce fibrillation, the PTFE preferably has an apparent density of less than 0.50 g/ml, more preferably 0.48 g/ml or less, still more preferably 0.45 g/ml or less, further preferably 0.40 g/ml or less, particularly preferably less than 0.40 g/ml, while preferably 0.20 g/ml or more, more preferably 0.25 g/ml or more, still more preferably 0.30 g/ml or more, particularly preferably 0.35 g/ml or more.

In order to achieve improved handleability, the PTFE preferably has a powder particle size of 300 μm or larger, more preferably 450 μm or larger, still more preferably 500 μm or larger, further preferably 550 μm or larger, particularly preferably 600 μm or larger, while preferably 1000 μm or smaller, more preferably 900 μm or smaller, still more preferably 800 μm or smaller, particularly preferably 700 μm or smaller.

The powder particle size is determined by laser diffractometry. Laser diffractometry is performed using HELOS & ROD OS system (trade name, Sympatec GmbH) by a dry method. Target powder is dispersed by compressed air at a dispersion pressure of 2 bar. The shadow of the target powder is projected by a laser, and the measurement sensor detects it. Thus, the particle size distribution of the target powder is calculated, and the volume-based average particle size (50% cumulative particle size) d50 is determined.

In order to prevent or reduce fibrillation, the PTFE preferably has a powder particle size of smaller than 600 μm, more preferably 400 μm or smaller, still more preferably 300 μm or smaller, particularly preferably smaller than 300 μm, while preferably 10 μm or larger, more preferably 50 μm or larger, particularly preferably 100 μm or larger.

In order to achieve improvement in handleability, expandability, binding force, and flexibility of the electrode and the like, the PTFE preferably has a standard specific gravity (SSG) of 2.200 or less, 2.180 or less, still more preferably 2.170 or less, further preferably 2.160 or less, further preferably 2.150 or less, further preferably 2.145 or less.

The SSG is also preferably 2.130 or more.

The SSG is determined by the immersion method in conformity with ASTM D792 using a sample molded in conformity with ASTM D4895.

In order to achieve a high molecular weight, improved binding force, and improved flexibility of the electrode and the like, the PTFE preferably has an average primary particle size of 350 nm or smaller, more preferably 330 nm or smaller, still more preferably 320 nm or smaller, further preferably 300 nm or smaller, further preferably 280 nm or smaller, particularly preferably 250 nm or smaller, while preferably 100 nm or larger, more preferably 150 nm or larger, still more preferably 170 nm or larger, particularly preferably 200 nm or larger.

The average primary particle size is measured by the following method.

A PTFE aqueous dispersion is diluted with water to a solid content concentration of 0.15% by mass. The

transmittance of 550-nm light relative to the unit length of the resulting diluted latex is measured. The Feret diameters in a transmission electron microscopic image are measured and the number-based length average particle size is determined therefrom. A calibration curve is obtained from these values. Using this calibration curve, the number average particle size is determined from the measured transmittance of 550-nm light incident on each sample, and defined as the average primary particle size.

In order to achieve excellent handleability, the PTFE may have an average aspect ratio of 2.0 or lower, preferably 1.8 or lower, more preferably 1.7 or lower, still more preferably 1.6 or lower, further preferably 1.5 or lower, further preferably 1.4 or lower, further preferably 1.3 or lower, particularly preferably 1.2 or lower, most preferably 1.1 or lower. The average aspect ratio may be 1.0 or higher.

The average aspect ratio is determined as follows. A PTFE powder or a PTFE aqueous dispersion diluted to a solid content concentration of about 1% by mass is observed using a scanning electron microscope (SEM) and 200 or more randomly extracted particles are imaged. The average of the ratios of the major axes to the minor axes of the particles is determined as the average aspect ratio.

The PTFE preferably has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

The PTFE may be either a homopolymer of tetrafluoroethylene (TFE) or a modified PTFE containing a polymerized unit based on TFE (TFE unit) and a polymerized unit based on a modifying monomer (hereinafter, also referred to as a "modifying monomer unit"). The modified PTFE may contain 99.0% by mass or more of the TFE unit and 1.0% by mass or less of the modifying monomer unit. The modified PTFE may consist of a TFE unit and a modifying monomer unit.

In order to achieve improvement in binding force and flexibility of the electrode and the like, the PTFE is preferably the modified PTFE. In order to achieve improved handleability, the PTFE is preferably a TFE homopolymer.

In order to achieve improvement in expandability, binding force, and flexibility of the electrode and the like, the modified PTFE preferably contains a modifying monomer unit in an amount falling within a range of 0.00001 to 1.0% by mass of all polymerized units. The lower limit of the amount of the modifying monomer unit is more preferably 0.0001% by mass, still more preferably 0.001% by mass, further preferably 0.005% by mass, particularly preferably 0.010% by mass. The upper limit of the amount of the modifying monomer unit is preferably 0.90% by mass, more preferably 0.80% by mass, more preferably 0.50% by mass, still more preferably 0.40% by mass, further preferably 0.30% by mass, further preferably 0.20% by mass, further preferably 0.15% by mass, further preferably 0.10% by mass, further preferably 0.08% by mass, particularly preferably 0.05% by mass, most preferably 0.03% by mass.

The modifying monomer unit herein means a moiety that is part of the molecular structure of PTFE and is derived from a modifying monomer.

The amounts of the respective polymerized units described above can be calculated by appropriate combination of NMR, FT-IR, elemental analysis, and X-ray fluorescence analysis in accordance with the types of the monomers.

The modifying monomer may be any monomer copolymerizable with TFE, and examples thereof include: perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; perfluoroallyl ethers; (perfluoroalkyl)ethylenes; and ethylene. One modifying monomer may be used or a plurality of modifying monomers may be used.

Examples of the perfluorovinyl ether include, but are not limited to, unsaturated perfluoro compounds represented by the following formula (A):

$$CF_2=CF\text{-}ORf \qquad (A)$$

wherein Rf is a perfluoroorganic group. The term "perfluoroorganic group" herein means an organic group in which all hydrogen atoms bonded to any carbon atom are replaced by fluorine atoms. The perfluoroorganic group may have an ether oxygen.

Examples of the perfluorovinyl ether include a perfluoro(alkyl vinyl ether) (PAVE) represented by the formula (A) in which Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include: those represented by the formula (A) wherein Rf is a C4-C9 perfluoro(alkoxy alkyl) group; those represented by the formula (A) wherein Rf is a group represented by the following formula:

[Chem. 1]

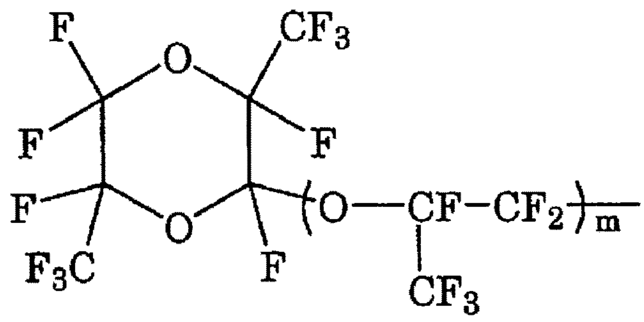

wherein m is 0 or an integer of 1 to 4; and those represented by the formula (A) wherein Rf is a group represented by the following formula:

[Chem. 2]

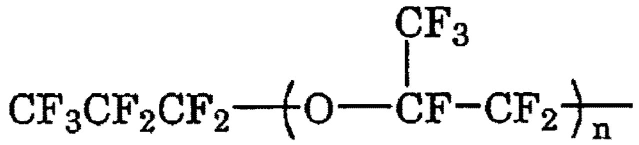

wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

$CF_2=CF-CF_2-ORf^1$ (B)

wherein $Rf^1$ is a perfluoroorganic group.

$Rf^1$ is preferably a C1-C10 perfluoroalkyl group or a C1-C10 perfluoroalkoxyalkyl group. The perfluoroallyl ether preferably includes at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably includes at least one selected from the group consisting of $CF_2=CF-CF_2-O-C_2F_5$, $CF_2=CF-CF_2-O-C_3F_7$, and $CF_2=CF-CF_2-O-C_4F_9$, and is still more preferably $CF_2=CF-CF_2-O-CF_2CF_2CF_3$.

In order to achieve improvement in expandability, binding force, and flexibility of the electrode and the like, the modifying monomer preferably includes at least one selected from the group consisting of PAVE and HFP, more preferably at least one selected from the group consisting of perfluoro(methyl vinyl ether) (PMVE) and HFP.

For formation of a mixture sheet with excellent strength, the different modifying monomer preferably includes at least one selected from the group consisting of VDF, HFP, CTFE, and PAVE, more preferably at least one selected from the group consisting of VDF, HFP, and CTFE.

In order to achieve improved heat resistance, in a preferred embodiment, the PTFE contains a TFE unit, a VDF unit, and a HFP unit, and the total amount of the VDF unit and the HFP unit is 1.0% by mass or less of all the polymerized units.

In order to achieve excellent handleability, the PTFE preferably has a core-shell structure. An example of the PTFE having a core-shell structure is a modified PTFE including a core of high-molecular-weight PTFE and a shell of lower-molecular-weight PTFE or modified PTFE in a particle. Examples of this modified PTFE include PTFEs disclosed in JP 2005-527652 T.

For formation of a mixture sheet with excellent strength, the PTFE preferably has an endothermic peak temperature of 320°C or higher, more preferably 325°C or higher, still more preferably 330°C or higher, further preferably 335°C or higher, further preferably 340°C or higher, further preferably 342°C or higher, particularly preferably 344°C or higher. The endothermic peak temperature is preferably 350°C or lower.

The endothermic peak temperature is the temperature corresponding to the minimum point on a heat-of-fusion curve obtained by performing differential scanning calorimetry (DSC) at a temperature-increasing rate of 10°C/min on a fluororesin that has never been heated to a temperature of 300°C or higher. When two or more minimum points are present in one melting peak, the temperatures corresponding to the respective peaks are considered as endothermic peak temperatures.

Preferably, the PTFE has at least one endothermic peak in a range of 333°C to 347°C on a heat-of-fusion curve obtained by increasing the temperature at a rate of 10°C/min using a differential scanning calorimeter (DSC), and has an enthalpy of fusion of 62 mJ/mg or higher at 290°C to 350°C calculated from the heat-of-fusion curve.

For formation of a mixture sheet with excellent strength, the PTFE preferably has a number average molecular weight (Mn) of $3.0 \times 10^6$ or more, more preferably $3.2 \times 10^6$ or more, still more preferably $3.5 \times 10^6$ or more, further preferably $3.7 \times 10^6$ or more, particularly preferably $4.0 \times 10^6$ or more. The number average molecular weight is preferably $7.0 \times 10^6$ or less, more preferably $6.5 \times 10^6$ or less, still more preferably $6.0 \times 10^6$ or less, further preferably $5.5 \times 10^6$ or less, particularly preferably $5.0 \times 10^6$ or less.

The number average molecular weight is the molecular weight determined in conformity with the method described in the following literature, based on the heat of crystallization estimated by performing temperature drop measurement with a differential scanning calorimeter (DSC) on the molten fluororesin. The measurement is performed five times, and the average of the three values excluding the maximum and minimum values is used.

Literature: Suwa, T.; Takehisa, M.; Machi, S., J. Appl. Polym. Sci. vol. 17, pp. 3253 (1973).

The PTFE is preferably substantially free from a fluorine-containing compound having a molecular weight of 1000 or less. The phrase "substantially free from a fluorine-containing compound" means that the amount of the fluorine-containing compound is 25 ppb by mass or less in the PTFE.

The amount of the fluorine-containing compound is more preferably less than 25 ppb by mass, still more preferably 10 ppb by mass or less, further preferably 5 ppb by mass or less, further preferably 3 ppb by mass or less, particularly preferably 1 ppb by mass or less. The lower limit is not limited, and may be an amount below the detection limit.

The amount of the fluorine-containing compound having a molecular weight of 1000 or less is measured by the following method.

To a 1-g portion of a sample weighed out is added 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the fluorine-containing compound in the extract in the LC/MS chromatogram is converted to the amount of the fluorine-containing compound.

The lower detection limit in this measurement method is 10 ppb by mass.

The amount of the fluorine-containing compound having a molecular weight of 1000 or less can also be measured by the following method.

To a 1-g portion of a sample weighed out is added 10 g (12.6 mL) of methanol, followed by ultrasonication at 60°C for two hours, standing at room temperature, and subsequent removal of solids, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Methanol standard solutions having five different known levels of fluorine-containing compound concentrations are prepared, and analyzed using a liquid chromatograph mass spectrometer. By first order approximation based on the methanol standard solution concentrations and the peak integral values in each concentration range, a calibration curve is created. The amount of the fluorine-containing compound contained in the extract is determined from the calibration curve, and converted to the amount of the fluorine-containing compound contained in the sample.

The lower detection limit in this measurement method is 1 ppb by mass.

Examples of the fluorine-containing compound having a molecular weight of 1000 or less include a fluorine-containing compound containing a hydrophilic group having a molecular weight of 1000 g/mol or less. The molecular weight of the fluorine-containing compound is preferably 800 or less, more preferably 500 or less.

Polymerized particles obtained by polymerization performed in the presence of a fluorine-containing surfactant usually contain the fluorine-containing surfactant in addition to PTFE. The fluorine-containing surfactant herein is used in polymerization.

The fluorine-containing compound having a molecular weight of 1000 or less may be a compound that is not added in polymerization, for example, a compound that is produced as a by-product in polymerization.

When containing an anionic portion and a cationic portion, the fluorine-containing compound having a molecular weight of 1000 or less refers to a fluorine-containing compound in which the anionic portion has a molecular weight of 1000 or less. The fluorine-containing compound having a molecular weight of 1000 or less does not include PTFE.

The hydrophilic group may be, for example, -COOM, - $SO_2M$, or -$SO_3M$, and examples include anionic groups such as -COOM and -$SO_3M$ wherein M is H, a metal atom, $NR^1_4$, imidazolium optionally containing a substituent, pyridinium optionally containing a substituent, or phosphonium optionally containing a substituent, where $R^1$ is H or an

organic group.

The fluorine-containing surfactant may also be a fluorine-containing surfactant in which the anionic portion has a molecular weight of 1000 or less (fluorine-containing anionic surfactant). The "anionic portion" means a portion excluding the cation in the fluorine-containing surfactant. For example, in the case of $F(CF_2)_{n1}COOM$, the anionic portion refers to the portion "$F(CF_2)_{n1}COO$".

Examples of the fluorine-containing anionic surfactant include compounds represented by the following formula ($N^0$):

$$X^{n0}\text{-}Rf^{n0}\text{-}Y^0 \qquad (N^0)$$

wherein $X^{n0}$ is H, Cl, or/and F; $Rf^{n0}$ is a C3-C20 linear, branched, or cyclic alkylene group in which any or all of H atoms are replaced by F atoms, where the alkylene group optionally contains at least one ether bond and any H is optionally replaced by Cl; and $Y^0$ is an anionic group.

The anionic group for $Y^0$ may be $-COOM$, $-SO_2M$, or - $SO_3M$, and may be $-COOM$ or $-SO_3M$.

M is H, a metal atom, $NR^1_4$, imidazolium optionally containing a substituent, pyridinium optionally containing a substituent, or phosphonium optionally containing a substituent, wherein $R^1$ is H or an organic group.

Examples of the metal atom include an alkali metal (Group 1) and an alkaline earth metal (Group 2), such as Na, K, and Li.

$R^1$ may be H or a $C_{1-10}$ organic group, may be H or a $C_{1-4}$ organic group, and may be H or a $C_{1-4}$ alkyl group.

M may be H, a metal atom, or $NR^1_4$, may be H, an alkali metal (Group 1), an alkaline earth metal (Group 2), or $NR^1_4$, and may be H, Na, K, Li, or $NH_4$.

$Rf^{n0}$ may be a group in which 50% or more of H atoms are replaced by fluorine atoms.

The fluorine-containing surfactant may be a single fluorine-containing surfactant or may be a mixture of two or more fluorine-containing surfactants.

Examples of the fluorine-containing surfactant include compounds represented by the following formulas. The fluorine-containing surfactant may be a mixture of these compounds:

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$,

and

[Chem. 3]

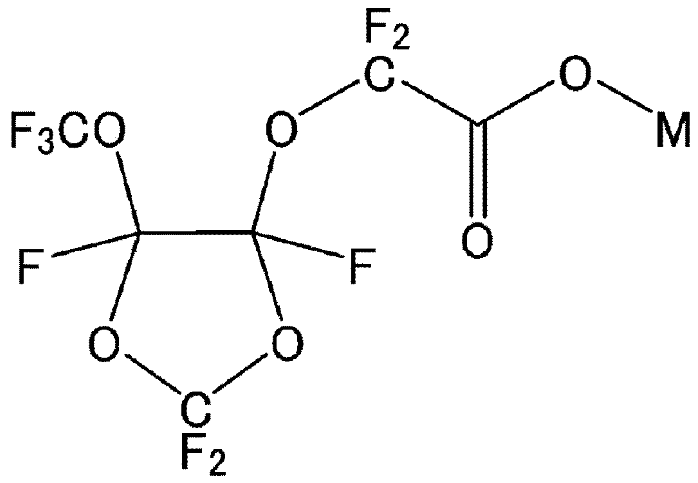

In each formula, M is H, a metal atom, $NR^1_4$, imidazolium optionally containing a substituent, pyridinium optionally containing a substituent, or phosphonium optionally containing a substituent, where $R^1$ is H or an organic group.
The PTFE is preferably substantially free from any of the fluorine-containing compounds represented by the above formulas.
In each of the above formulas, M may be H, a metal atom, or $NR^1_4$, may be H, an alkali metal (Group 1), an alkaline earth metal (Group 2), or $NR^1_4$, or may be H, Na, K, Li, or $NH_4$.
$R^1$ may be H or a $C_{1-10}$ organic group, may be H or a $C_{1-4}$ organic group, or may be H or a $C_{1-4}$ alkyl group.
The PTFE substantially free from any of the fluorine-containing compounds represented by the above formulas can prevent or reduce gas generation and deterioration of battery characteristics, and can improve the sheet strength.
The phrase "substantially free from any of the fluorine-containing compounds represented by the above formulas" means that the amount of any of the fluorine-containing compounds is 25 ppb by mass or less in the PTFE.
The amount of the fluorine-containing compound is preferably less than 25 ppb by mass, more preferably 10 ppb by mass or less, still more preferably 5 ppb by mass or less, further preferably 3 ppb by mass or less, particularly preferably 1 ppb by mass or less. The lower limit is not limited, and may be an amount below the detection limit.
The PTFE is also preferably substantially free from a fluorine-containing compound represented by the following formula:

$$[C_{n-1}F_{2n-1}COO^-]M^+$$

wherein n is an integer of 9 to 14, preferably 9 to 12; and $M^+$ is a cation. Such a PTFE powder can prevent or reduce gas generation and deterioration of battery characteristics and improve the sheet strength.
M constituting the cation $M^+$ in the formula is the same as M mentioned above.
The phrase "substantially free from a fluorine-containing compound represented by the formula" means that the amount of the fluorine-containing compound is 25 ppb by mass or less in the PTFE.
The amount of the fluorine-containing compound is preferably less than 25 ppb by mass, more preferably 10 ppb by mass or less, still more preferably 5 ppb by mass or less, further preferably 3 ppb by mass or less, particularly preferably 1 ppb by mass or less. The lower limit is not limited, and may be an amount below the detection limit.
It should be appreciated that a variety of modifications and changes in the structure and other details may be made to the aforementioned embodiments without departing from the spirit and scope of the claims.

## EXAMPLES

The disclosure is described hereinbelow with reference to experiment examples, but the disclosure is not limited to these experiment examples.

### <Standard specific gravity (SSG)>

The SSG was determined by the immersion method in conformity with ASTM D792 using a sample molded in conformity with ASTM D4895-89.

<RR100 extrusion pressure (extrusion pressure at reduction ratio of 100)>

Fifty grams of PTFE powder and 10.25 g of hydrocarbon oil (trade name: Isopar E, available from ExxonMobil Corporation) as an extrusion aid were mixed for three minutes in a polyethylene container. A cylinder of an extruder was filled with the resulting mixture at room temperature (25 $\pm$ 2°C). A load of 0.47 MPa was applied to a piston inserted into the cylinder and maintained for one minute. Then, the mixture was extruded through an orifice at a ram speed of 51 cm/min. The ratio of the cross-sectional area of the cylinder to the cross-sectional area of the orifice was 100. The value obtained by dividing the load (N) at which the pressure was in equilibrium in the latter half of the extrusion operation by the cylinder cross-sectional area was defined as the extrusion pressure (MPa).

<Expansion test>

The expansion test was performed by the following method in conformity with the method described in JP 2002-201217 A.

A beading obtained by the above paste extrusion was heated at 230°C for 30 minutes, whereby the lubricant was removed from the beading. The beading (extrudate) was cut to an appropriate length and the resulting sample was clamped at each end with a gap between the clamps of 1.5 inches (38 mm), followed by heating to 300°C in an air-circulating furnace. The clamps were then moved apart at a desired speed (stretching speed) until the separation distance corresponded to the desired degree of stretching (total degree of stretching). The expansion test (stretching test) was performed in this manner. The stretching method was essentially in conformity with the method disclosed in US 4576869 B, except that the extrusion speed was different (51 cm/min, not 84 cm/min). The "degree of stretching" shows the increase in length attributable to expansion, and is typically expressed in relation to the original length. In the above stretching method, the stretching speed was 1000%/sec and the total degree of stretching was 2400%. Beads that did not break during the expansion in the expansion test were evaluated as expandable, and those that broke during the expansion were evaluated as non-expandable.

<Apparent density>

The apparent density was determined in conformity with JIS K6892.

<Powder particle size>

The powder particle size was determined by laser diffractometry. Laser diffractometry was performed using HELOS & ROD OS system (trade name, Sympatec GmbH) by a dry method. Target powder was dispersed by compressed air at a dispersion pressure of 2 bar. The shadow of the target powder was projected by a laser, and the measurement sensor detected it. Thus, the particle size distribution of the target powder was calculated, and the volume-based average particle size (50% cumulative particle size) d50 was determined. The powder particle size was defined as equivalent to the particle size corresponding to 50% of the cumulative volume in the particle size distribution.

<Water content>

The mass of the PTFE powder in an amount of about 20 g was weighed before and after heating at 150°C for two hours, and the water content was calculated by the following equation. The sample was taken three times, and this calculation was performed for each sample, and the values were then averaged. This average was taken as the water content.

Water content (% by mass) = [(mass (g) of PTFE powder before heating) - (mass (g) of PTFE powder after heating)]/(mass (g) of PTFE powder before heating) $\times$ 100

<Degree of hardening of powder>

A 60-g portion of PTFE powder after storage was taken out from the container and sifted through a mesh (aperture: 1.54 mm), and the mass of the solids left on the sieve was measured.

The above operation was repeated 10 times to determine the average of the mass of the solids left on the sieve. The degree of hardening of the powder was evaluated based on the value "determined average (g)/60 (g) $\times$ 100 (% by mass)". The smaller the value is, the less likely the powder is to be hardened and the better.

<Production of positive electrode mixture composite>

Li $(Ni_{0.6}Mn_{0.2}Co_{0.2})O_2$ (NMC622) as a positive electrode active material, carbon black as a conductive aid, and PTFE powder as a binder were weighed out in a mass ratio (positive electrode active material:binder:conductive aid) of 95:2:3. These materials were put in a blender (Osaka Chemical Co., Ltd., WB-1) and stirred at 25000 rpm for 60 seconds, whereby a positive electrode mixture composite was obtained.

<Ease of binding>

A shaker was provided in which a sieve with an aperture of 2.0 mm, a sieve with an aperture of 0.15 mm, and a bottom tray were stacked in tandem. The positive electrode mixture composite was put into the upper sieve. After running the shaker at a speed of 50 rpm for one minute, the mass of the composite sifted onto the bottom tray was weighed.

The ease of binding of the composite (cohesiveness of the composite) was evaluated based on the detachment rate calculated from the following equation:

$$\text{Detachment rate} = (W2/W1) \times 100\ (\%)$$

wherein W1 represents the total mass (g) of the composite before the test and W2 represents the mass (g) of the sifted composite.

Excellent: Detachment rate of lower than 1%
Good: Detachment rate of 1% or higher and lower than 2%
Acceptable: Detachment rate of 2% or higher and lower than 3%
Poor: Detachment rate of 3% or higher

Experiment Example 1

A 60-L container was provided which had a shape with a forward taper angle of 3.0° and a difference of 30 mm between the top-face and bottom-face inner diameters and was made of plastic (material: polypropylene, no plasticizer (0 mass% content in polypropylene), surface roughness of the inner wall 0.23 μm). PTFE powder in an amount of 15 kg was put in the container and stored in a 25°C atmosphere for six months. The PTFE powder after storage had a degree of hardening of 0.4% by mass and a water content of 0.002% by mass.

A positive electrode mixture composite was prepared by the above method, and its ease of binding was evaluated. The detachment rate was 0.4% by mass and the ease of binding was excellent.

The PTFE powder used was the PTFE powder described in Example 1 in WO 2023/054709. It had a standard specific gravity (SSG) of 2.159, a RR100 extrusion pressure of 15.1 MPa, a powder particle size of 540 μm, an apparent density of 0.48 g/ml, and a water content of 0.002% by mass and was expandable.

Experiment Example 2

The PTFE powder was stored in a 25°C atmosphere for six months as in Experiment Example 1, except that the container had the similar shape as that in Experiment Example 1 and included a lid to be attached to the opening and a clamp for fixing the lid to the container and that the PTFE powder used to fill the container was the PTFE powder described in Example 2 in WO 2023/054707 which had a standard specific gravity (SSG) of 2.145, a RR100 extrusion pressure of 17.4 MPa, a powder particle size of 540 μm, an apparent density of 0.43 g/ml, and a water content of 0.000% by mass and was expandable. The PTFE powder after storage had a degree of hardening of 0.3% by mass and a water content of 0.001% by mass.

As a result of the evaluation on the ease of binding of the positive electrode mixture composite, the detachment rate was 0.5% by mass and the ease of binding was excellent.

Experiment Example 3

The PTFE powder was stored in a 10°C atmosphere for six months as in Experiment Example 2, except that a step provided on the lid was engaged with a protrusion provided on the main body of the container and silica gel was used as a desiccant in the container. The PTFE powder after storage had a degree of hardening of 0.2% by mass and a water content of 0.000% by mass. As a result of the evaluation on the ease of binding of the positive electrode mixture composite, the detachment rate was 0.5% by mass and the ease of binding was excellent.

Experiment Example 4

The PTFE powder was stored in a 25°C atmosphere for six months as in Experiment Example 2, except that the PTFE powder used to fill the container was the PTFE powder described in Example 18 in WO 2023/054723 which had a standard specific gravity (SSG) of 2.170, a RR100 extrusion pressure of 5.6 MPa, a powder particle size of 540 μm, an apparent density of 0.48 g/ml, and a water content of 0.001% by mass and was expandable. The PTFE powder after storage had a degree of hardening of 0.1% by mass and a water content of 0.002% by mass. As a result of the evaluation on the ease of binding of the positive electrode mixture composite, the detachment rate was 0.8% by mass and the ease of binding was excellent.

Experiment Example 5

The PTFE powder was stored in a 25°C atmosphere for six months as in Experiment Example 1, except that 5 kg of the PTFE powder was put in a 30-L container that had a shape with a forward taper angle of 0° and a difference of 0 mm between the top-face and bottom-face inner diameters and was made of plastic (material: polypropylene, no plasticizer (0 mass% content in polypropylene), surface roughness of the inner wall 0.23 μm). The PTFE powder after storage had a degree of hardening of 2.5% by mass and a water content of 0.005% by mass. As a result of the evaluation on the ease of binding of the positive electrode mixture composite, the detachment rate was 2.1% by mass and the ease of binding was acceptable.

Experiment Example 6

The PTFE aqueous dispersion obtained in Production Example 1 in WO 2023/054713 was diluted to a solid content concentration of 8.5% by mass, and the liquid temperature was adjusted to 10°C. To the dilution was added nitric acid with high-speed stirring in the container so that PTFE was coagulated, followed by drying at 210°C, whereby a PTFE powder was obtained. The PTFE powder obtained had a standard specific gravity (SSG) of 2.158, a RR100 extrusion pressure of 16.3 MPa, a powder particle size of 145 μm, an apparent density of 0.35 g/ml, and a water content of 0.002% by mass and was expandable. The PTFE powder obtained was stored in a 25°C atmosphere for six months as in Experiment Example 5. The PTFE powder after storage had a degree of hardening of 1.5% by mass and a water content of 0.005% by mass. As a result of the evaluation on the ease of binding of the positive electrode mixture composite, the detachment rate was 1.3% by mass and the ease of binding was good.

Experiment Example 7

The PTFE powder was stored as in Experiment Example 1 using a container that had a shape with a forward taper angle of 0°, i.e., a difference of 0 mm between the top-face and bottom-face inner diameters and was made of plastic (material: polypropylene, no plasticizer (0 mass% content in polypropylene), surface roughness of the inner wall 0.23 μm). The PTFE powder after storage had a degree of hardening of 5.6% by mass.

A positive electrode mixture composite was prepared by the above method, and its ease of binding was evaluated. The detachment rate was 3.6% by mass and the ease of binding was poor.

REFERENCE SIGNS LIST

1: container
2: main body
2a: inner wall
2b: outer wall
2c: opening
2d: protrusion
2e: step
3: lid
3a: step
3b: protrusion
4: clamp
4a: fixing portion
A: taper angle

## Claims

1. A container for filling with polytetrafluoroethylene, the container having a columnar shape with an inner wall of a side surface tapered either forward or inversely.

2. The container according to claim 1, wherein the polytetrafluoroethylene has an extrusion pressure at a reduction ratio of 100 of 5 MPa or higher and/or is expandable.

3. The container according to claim 1 or 2, wherein the polytetrafluoroethylene has an extrusion pressure at a reduction ratio of 100 of 5 MPa or higher and is expandable.

4. The container according to any one of claims 1 to 3, wherein the polytetrafluoroethylene has an extrusion pressure at a reduction ratio of 100 of 5 to 20 MPa.

5. The container according to any one of claims 1 to 4, wherein the polytetrafluoroethylene is used as a binder for an electrochemical device.

6. The container according to any one of claims 1 to 5, wherein a difference between a top-face inner diameter and a bottom-face inner diameter is 5 to 100 mm.

7. The container according to any one of claims 1 to 6, wherein the container has a taper angle of 0.5° to 10°.

8. The container according to any one of claims 1 to 7, wherein the container is made of polypropylene substantially free from a plasticizer.

9. The container according to any one of claims 1 to 8, wherein the container has an inner wall with a surface roughness of 1.00 μm or less.

10. The container according to any one of claims 1 to 9, wherein the container includes:

    a main body with an opening;
    a lid to be attached to the opening; and
    a clamp for fixing the lid.

11. The container according to claim 10, wherein the lid is attached to the opening in a state where a step provided on the lid is engaged with a protrusion provided on the main body and/or in a state where a protrusion provided on the lid is engaged with a step provided on the main body.

12. The container according to any one of claims 1 to 11, wherein the polytetrafluoroethylene has a water content of 0.050% by mass or less.

13. The container according to any one of claims 1 to 12, wherein the polytetrafluoroethylene has an apparent density of 0.40 to 0.60 g/ml.

14. The container according to any one of claims 1 to 13, wherein the polytetrafluoroethylene has an apparent density of 0.43 to 0.60 g/ml.

15. The container according to any one of claims 1 to 14, wherein the polytetrafluoroethylene has a powder particle size of 300 to 700 μm.

16. The container according to any one of claims 1 to 15, wherein the polytetrafluoroethylene has a powder particle size of 500 to 700 μm.

**17.** The container according to any one of claims 1 to 16, wherein the polytetrafluoroethylene has a standard specific gravity of 2.200 or less.

**18.** The container according to any one of claims 1 to 17, wherein the polytetrafluoroethylene has a standard specific gravity of 2.130 to 2.170.

**19.** The container according to any one of claims 1 to 18, wherein the polytetrafluoroethylene has an apparent density of 0.43 to 0.60 g/ml, a powder particle size of 500 to 700 μm, and a standard specific gravity of 2.130 to 2.170.

**20.** The container according to any one of claims 1 to 19, wherein the polytetrafluoroethylene is a homopolymer of tetrafluoroethylene or a modified polytetrafluoroethylene containing a polymerized unit based on tetrafluoroethylene and a polymerized unit based on a modifying monomer.

**21.** The container according to claim 20, wherein the modifying monomer includes at least one selected from the group consisting of perfluoro(methyl vinyl ether) and hexafluoropropylene.

**22.** The container according to any one of claims 1 to 21, wherein the container is filled with the polytetrafluoroethylene.

**23.** The container according to any one of claims 1 to 22, wherein the container includes a desiccant.

**24.** A method for storing polytetrafluoroethylene, comprising storing the polytetrafluoroethylene by filling the container according to any one of claims 1 to 23 with the polytetrafluoroethylene.

**25.** A container for filling with polytetrafluoroethylene, the polytetrafluoroethylene used to fill the container having a mass of 10 kg or less.

**26.** The container according to claim 25, wherein the polytetrafluoroethylene used to fill the container has a mass of 5 kg or less.

**27.** The container according to claim 25 or 26, wherein the polytetrafluoroethylene has a powder particle size of 100 μm or larger and smaller than 600 μm.

**28.** The container according to any one of claims 25 to 27, wherein the polytetrafluoroethylene has an apparent density of 0.35 to 0.48 g/ml.

**29.** The container according to any one of claims 25 to 28, wherein the polytetrafluoroethylene has a water content of 0.050% by mass or less.

**30.** The container according to any one of claims 25 to 29, wherein the polytetrafluoroethylene has a water content of 0.005% by mass or less.

**31.** The container according to any one of claims 25 to 30, wherein the polytetrafluoroethylene has a standard specific gravity of 2.130 to 2.170.

**32.** The container according to any one of claims 25 to 31, wherein the polytetrafluoroethylene has a water content of 0.005% by mass or less, an apparent density of 0.35 to 0.48 g/ml, a powder particle size of 100 μm or larger and smaller than 600 μm, and a standard specific gravity of 2.130 to 2.170.

**33.** The container according to any one of claims 25 to 32, wherein the polytetrafluoroethylene has a powder particle size of 100 μm or larger and smaller than 300 μm and/or an apparent density of 0.35 g/ml or more and less than 0.40 g/ml.

**34.** The container according to any one of claims 25 to 33, wherein the container is filled with the polytetrafluoroethylene.

FIG.1

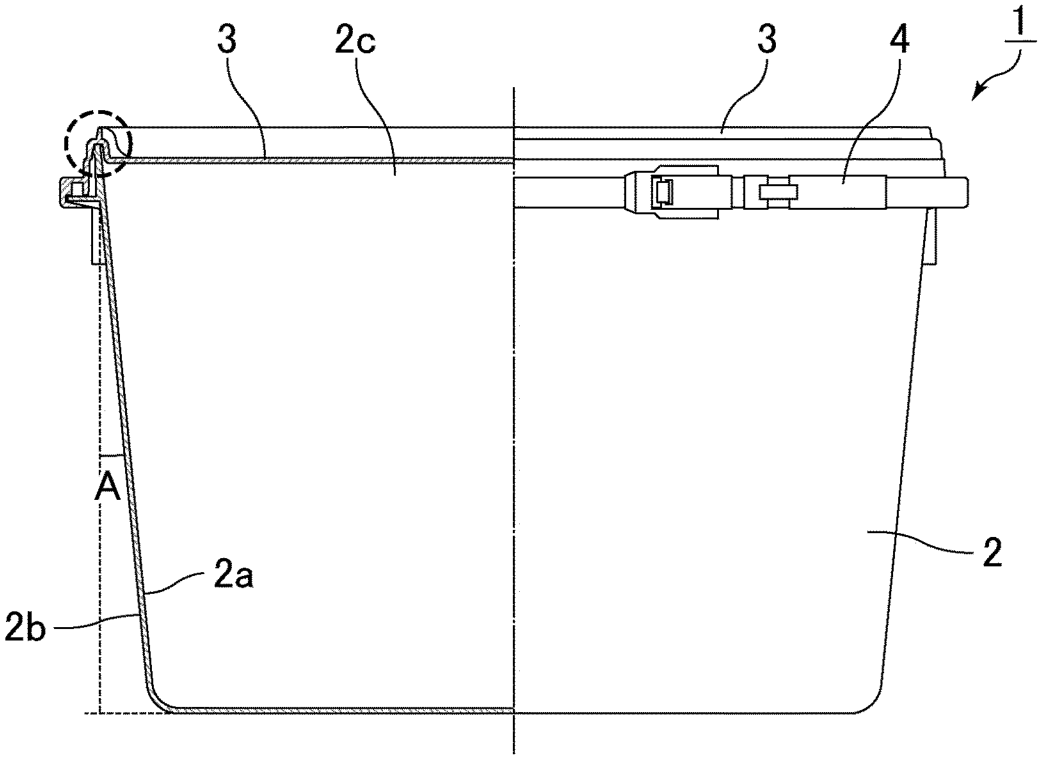


FIG.2

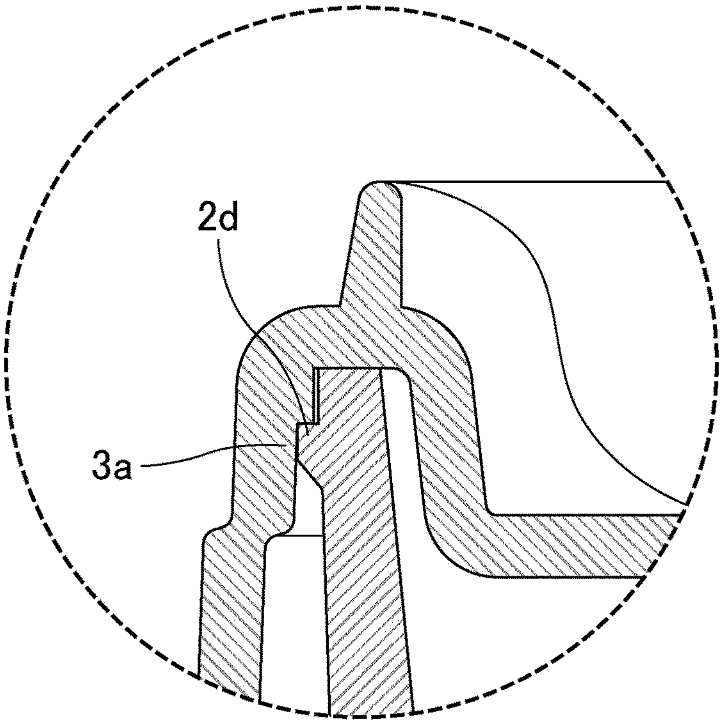

FIG.3

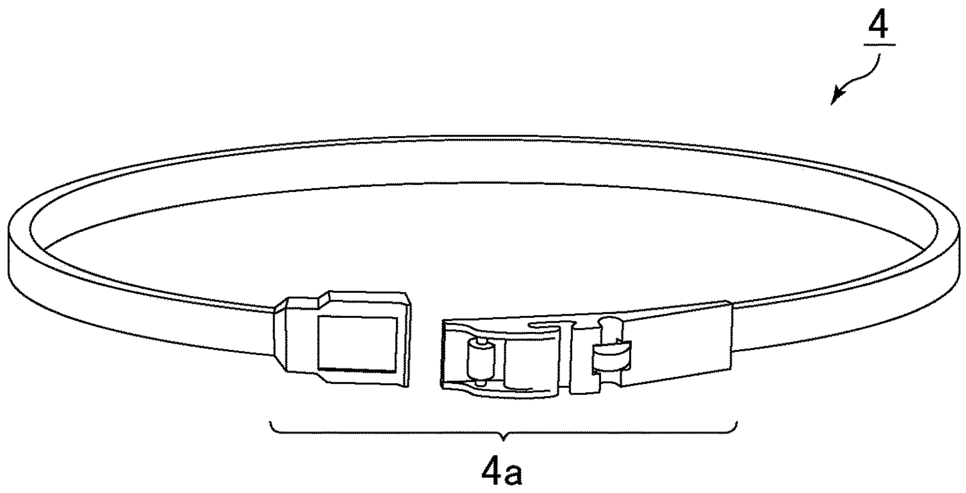


FIG.4

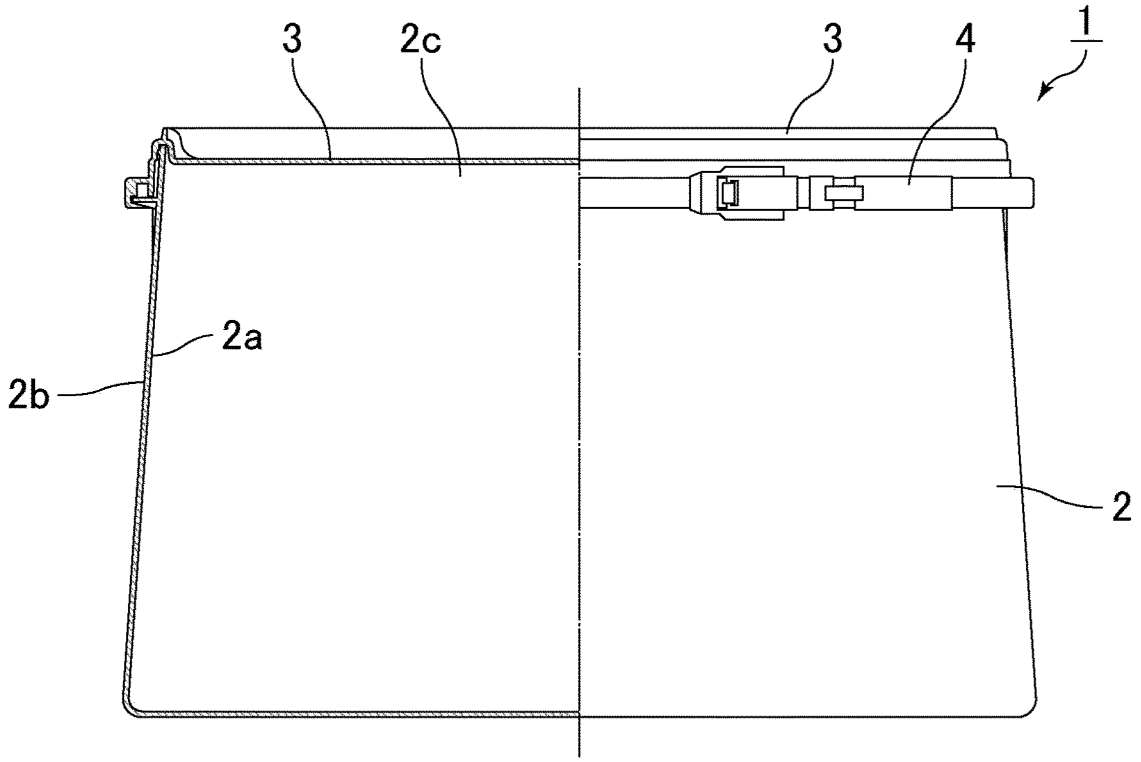

FIG.5

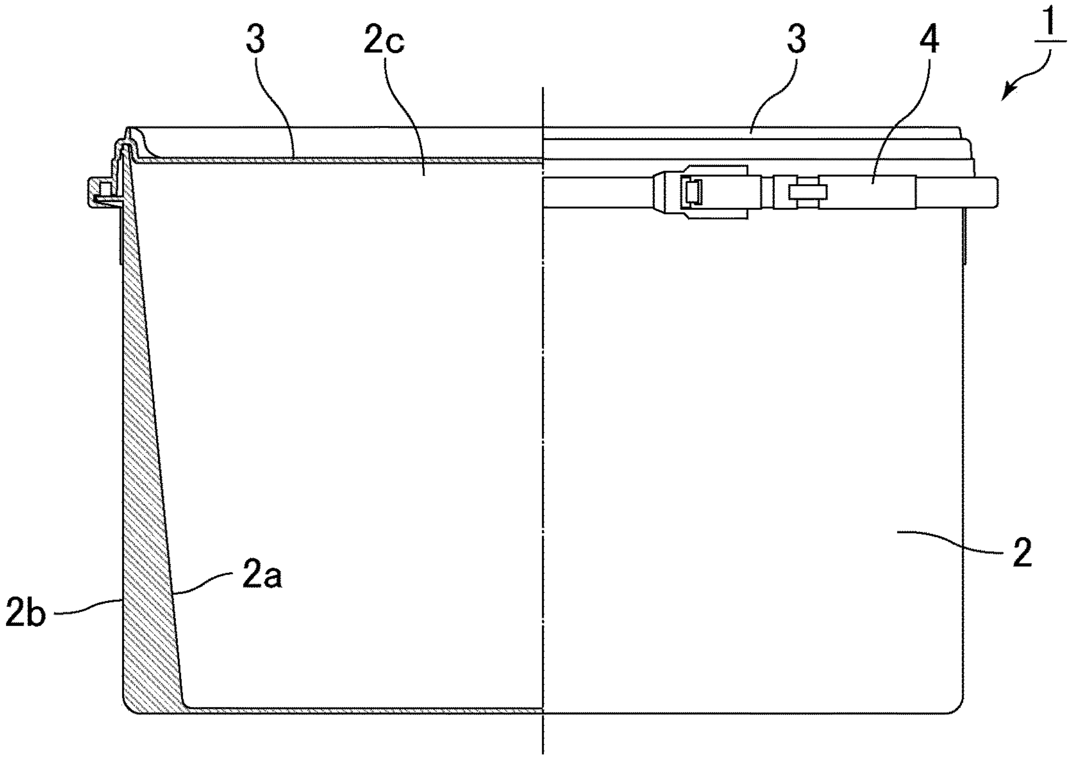


FIG.6

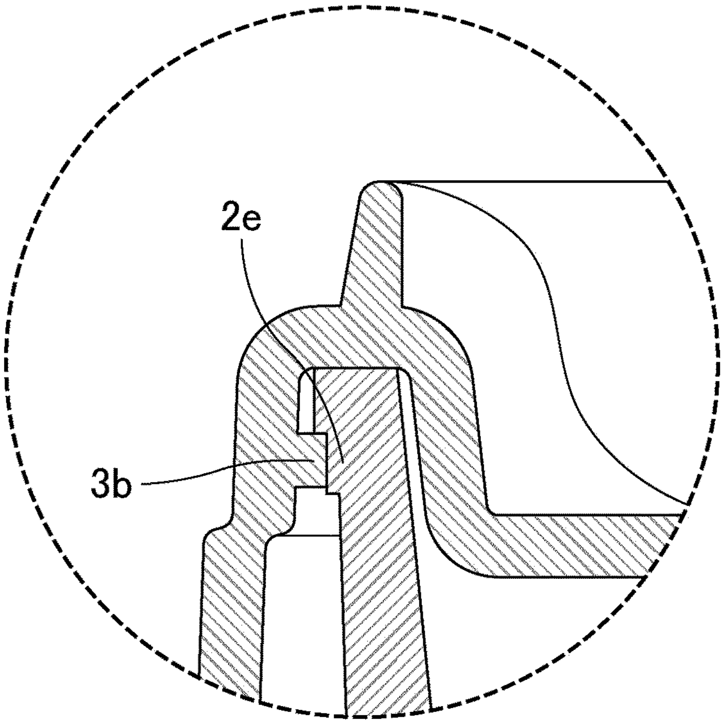

FIG.7

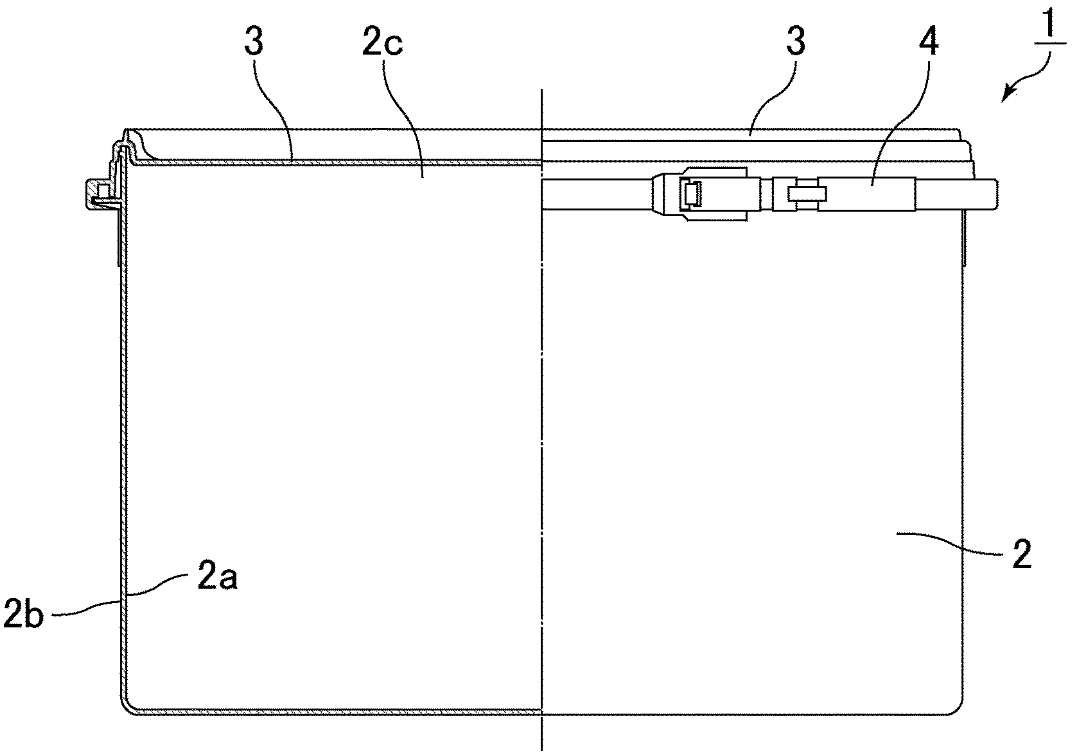

## INTERNATIONAL SEARCH REPORT

International application No.
**PCT/JP2024/023636**

**A. CLASSIFICATION OF SUBJECT MATTER**

***B65D 77/00***(2006.01)i; ***B65D 45/32***(2006.01)i; ***C08J 3/12***(2006.01)i
FI: B65D77/00 C; B65D45/32; C08J3/12 Z CEW

According to International Patent Classification (IPC) or to both national classification and IPC

**B. FIELDS SEARCHED**

Minimum documentation searched (classification system followed by classification symbols)

B65D77/00; B65D45/32; C08J3/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2004-182299 A (DAIKIN INDUSTRIES, LTD.) 02 July 2004 (2004-07-02)<br>claims 1, 5, paragraphs [0014], [0018]-[0024], fig. 2-4 | 1-9, 22, 24-34<br>10-24 |
| X<br>Y | JP 2016-511201 A (COMPAGNIE PLASTIC OMNIUM) 14 April 2016 (2016-04-14)<br>paragraphs [0002], [0038]-[0058], fig. 1-6 | 1-9, 22, 24-34<br>10-24 |
| Y | JP 3234857 U (NINGBO CHANGQI FLOURINE PLASTIC PRODUCTS CO., LTD.) 11 November 2021 (2021-11-11)<br>paragraph [0002] | 10-24 |
| A | JP 2003-522683 A (SULO EISENWERK STREUBER & LOHMANN GMBH) 29 July 2003 (2003-07-29) | 1-34 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 September 2024** | **10 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2024/023636**

| Patent document cited in search report | Publication date (day/month/year) | Patent family member(s) | Publication date (day/month/year) |
|---|---|---|---|
| JP 2004-182299 A | 02 July 2004 | WO 2004/050500 A1<br>AU 2003277653 A | |
| JP 2016-511201 A | 14 April 2016 | US 2015/0375906 A1<br>paragraphs [0002], [0059]-[0082], fig. 1-6<br>WO 2014/128428 A1<br>EP 2958819 A1<br>FR 3002522 A1<br>KR 10-2015-0122200 A<br>CN 205256941 U<br>RU 2015137301 A | |
| JP 3234857 U | 11 November 2021 | CN 215400452 U | |
| JP 2003-522683 A | 29 July 2003 | US 2003/0116571 A1<br>WO 2001/058775 A1<br>EP 1255680 A1<br>DE 10005579 A1<br>DE 20122207 U1<br>AU 4060301 A<br>CA 2406181 A1<br>CN 1420834 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004031179 A
- JP H11343317 A
- JP 2005527652 T
- JP 2002201217 A
- US 4576869 B
- WO 2023054709 A
- WO 2023054707 A
- WO 2023054723 A
- WO 2023054713 A


### Non-patent literature cited in the description


- **SUWA, T.** ; **TAKEHISA, M.** ; **MACHI, S.** *J. Appl. Polym. Sci.*, 1973, vol. 17, 3253